# EUROPEAN PATENT APPLICATION

(11) **EP 1 350 923 A1**
(43) Date of publication of application: **08.10.2003**
(21) Application number: 02715706.4
(22) Date of filing: 08.01.2002
(51) Int. Cl.: F01D 1/32

(54) **ROTARY NOZZLE TURBINE**

(30) Priority: 13.01.2001 JP 2001040961
(71) Applicant: IIZUKA, Takashi, Nakano-ku, Tokyo 164-0014 (JP)
(72) Inventor: IIZUKA, Takashi, Nakano-ku, Tokyo 164-0014 (JP)
(74) Representative: Lindner, Manfred Klaus, Dipl.-Phys.
(86) International application number: JP0200016
(87) International publication number: WO02055844

(57) **Abstract**

A turbine suitable for use for low-power cogeneration or as a power generator of electric automobiles, the turbine being characterized in that a vane (1) curved in section and having a nozzle (2) somewhere in the inner side is constructed to extend along the axis of a hollow vane shaft (3), wherein the fluid fed from the vane shaft end into the vane shaft is spouted through the nozzle (2) against the inner side of the vane and is rotated.

## Description

### Technical Field

The present invention relates to a turbine suitable for a low-power apparatus and adapted to discharge high-pressure steam or combustion gas thereby rotating the turbine using both counteraction and impulsion forces of the discharged steam/gas.

### Background Art

Various types of turbines are available today. For instance, steam turbines are used for atomic (nuclear) power generation and thermal power generation, and gas turbines are used in airplanes and cogeneration machinery. Most of these conventional turbines are designed to generate high power (several kW or more).

Small size turbines have not been marketed in the past. The primary reason is because a fuel is consumed too much when the turbine is operated in a low power mode. This is an inherent characteristic of the turbine.

In recent years, a shortage of fossil fuel resources has become a concern, and superiority of distributed generation using cogeneration is recognized. Accordingly, there is a demand for small size turbines which are suited for home cogeneration systems.

### Disclosure of the Invention

The present invention is directed to a turbine characterized in that a vane having a curled cross sectional shape and provided with a nozzle inside the curled vane is provided, the vane extends along a length of a vane shaft, and a fluid is supplied to the interior of the vane shaft from an end of the vane shaft such that the fluid is discharged from the nozzle towards an inner surface of the vane, thereby causing the turbine to rotate.

The turbine of the present invention is, at a glance, similar to a Heron turbine or a sprinkler. However, the Heron turbine and sprinkler discharge a fluid from a spot-shaped nozzle. The turbine of the present invention is quite different from the Heron turbine and sprinkler in that the turbine has the vane, and the nozzle is provided linearly along the vane shaft.

### Brief Description of the Drawings

Figure 1 is a cross sectional view of a vane portion to illustrate a structure of a turbine;
Figure 2 illustrates a cross sectional view taken along the line I-I; and
Figure 3 also illustrates a cross sectional view taken along the line I-I in another embodiment, in which vanes rotate about a fixed shaft.

### Best Mode For Carrying Out the Invention

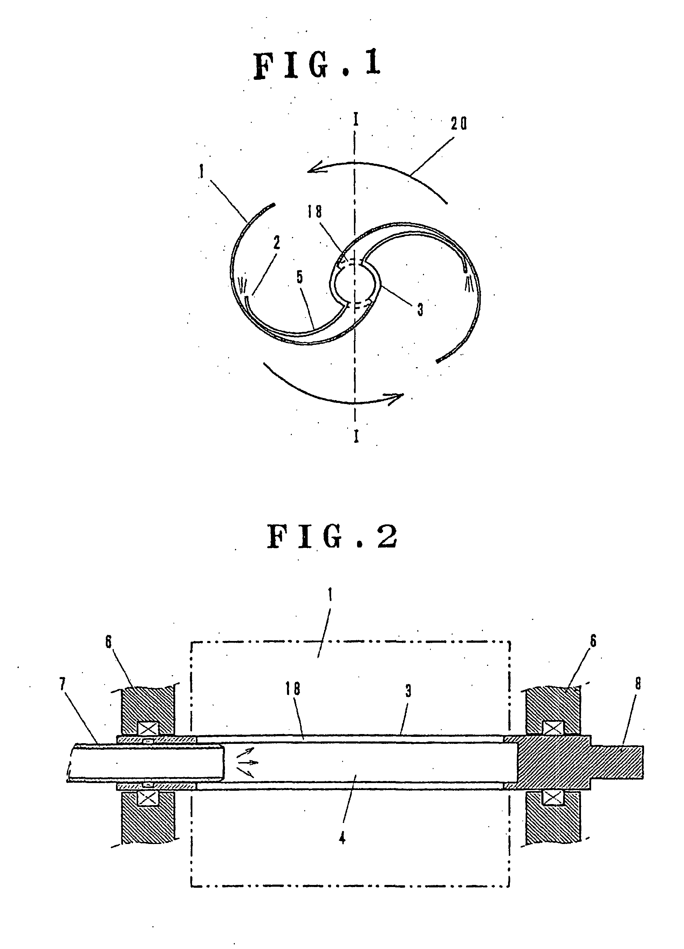

As illustrated in the cross sectional view of Figure 1, each of vanes 1 of a turbine according to the present invention has a curved cross section, and extends along a length of a vane shaft 3.

A nozzle plate 5 extends generally along the inner bent or curled surface of each vane 1 to define a nozzle (discharge opening) 2 that opens in the middle of the vane.

As shown in the I-I cross sectional view of Figure 2, both ends of the vane shaft 3 are rotatably supported by bearings 6. A steam feed pipe 7 extends into one end of the vane shaft to supply steam to a chamber 4 formed inside the vane shaft. The other end of the vane shaft is an output shaft 8 connected to a separate apparatus such as a power generator which is operated (rotated) by the turbine.

A high pressure steam introduced to the chamber 4 from the steam feed pipe 7 flows into each open gate 18 of the vane shaft, which is continuous to the chamber 4, and then into a space between each vane 1 and nozzle plate 5. As a result, the high pressure steam is injected from each nozzle 2, and each vane 1 rotates in the direction 20.

Rotation of the vanes 1 is caused by a resultant force derived from three forces; a rotation force imparted to the vanes by the steam before the steam reaches the nozzles 2, a counteraction force generated by the steam leaving the nozzles, and an impulse force applied to the vanes after the steam is injected from the nozzles. The nozzles are provided at such positions as to maximize the resultant force.

It is well known that the injection speed of the steam is increased if a front (downstream) end of each nozzle 2 is enlarged. This structure is preferably employed in the illustrated embodiment.

In addition, a downstream end of each vane preferably has a smaller radius of curvature than other sections of the vane, in order to increase rotational torque of the vane.

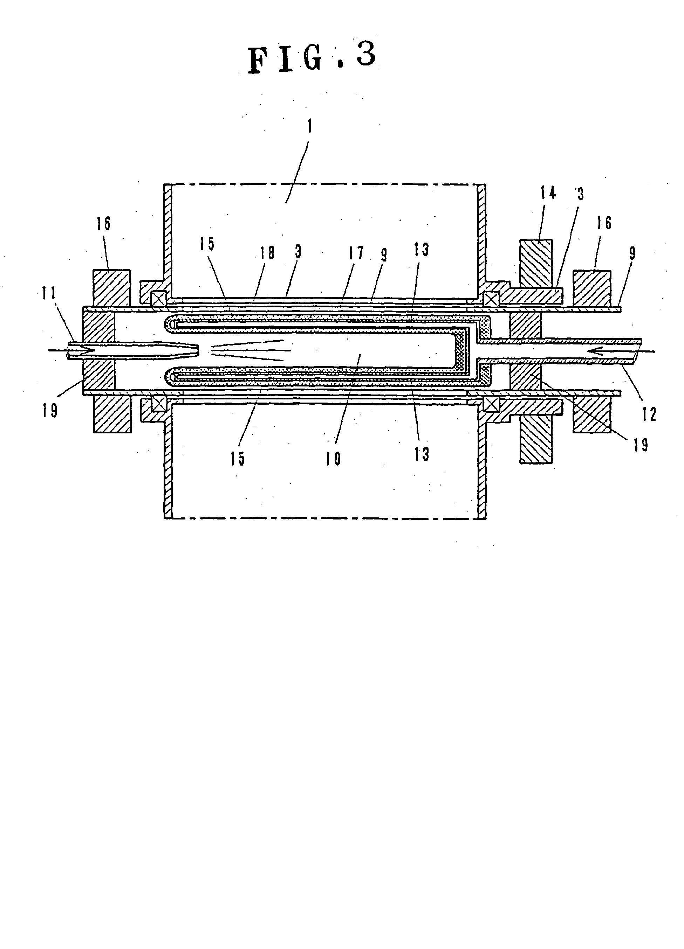

Figure 3 illustrates another embodiment in which the vane shaft 3 rotates about another shaft 9 secured to a holder 16. Inside the fixed shaft 9, a steam generating chamber 10 is formed. Opposite ends of the steam generating chamber 10 are closed by seal covers 19.

In this embodiment, a high temperature gas feed pipe 11 and/or a water feed pipe 12 can be attached to the ends of the stationary shaft 9. Branch lines 13, which have a number of water feed openings, extend from the water feed pipe 12. The branch lines 13 are enclosed by a porous ceramic material 15 or zeolite, and extend along the inner wall of the steam generating chamber 10.

The water is pumped into the porous ceramic material 15 from the water feed pipe 12, and produces a large amount of steam as it is heated by the high temperature gas supplied from the hot gas feed pipe 11.

The superheated steam flows through openings 17 of the stationary shaft 9 and the open gates 18 of the vane shaft 3, and is discharged from the nozzles 2 to rotate the vanes 1.

Rotational output of the turbine can be transmitted to a separate device from a gear 14 or the like attached to the vane shaft 3.

It should be noted that combustion means may be placed in the steam generating chamber 10 to produce a fire and generate the steam, instead of feeding the high temperature gas into the steam generating chamber 10.

Further, the steam generating chamber may be provided externally of the turbine.

In order to maintain an optimal condition for the steam generation, the temperature and/or pressure inside the steam generating chamber are controlled. To this end, one or more sensors may be provided.

Since the steam is produced inside the combustion chamber in this embodiment, a boiler is unnecessary. Accordingly, it is possible to construct a highly efficient, inexpensive system.

### Industrial Applicability

The present invention provides a small-power turbine having a simple structure, which is suitable for a home cogeneration apparatus and power generator of an electric vehicle.

## Claims

1. A turbine **characterized in that** a vane (1) having a curled cross sectional shape and equipped with a nozzle (2) inside the vane is provided such that the vane extends along a length of a hollow vane shaft (3), a fluid supplied to an interior of the vane shaft from an end of the vane shaft is discharged from the nozzle (2), and the rotating vane shaft is used as an output.

2. A method of producing hot steam, using a turbine which rotates based on a principal defined in claim 1, wherein a branch water pipe (13) enclosed by a porous ceramic material (15) is provided in a steam generating chamber (10), a high temperature gas is introduced to the steam generating chamber (10), and pressurized water is supplied to a main water pipe (12) such that the pressurized water is discharged to the ceramic material so as to produce steam.
